# EUROPÄISCHE PATENTANMELDUNG

(11) **EP 3 964 860 A1**
(43) Veröffentlichungstag der Anmeldung: **09.03.2022**
(21) Anmeldenummer: 21195240.3
(22) Anmeldetag: 07.09.2021
(51) Int. Cl.: G01S 7/481, G01S 17/931, G01S 17/89

(54) **ADAPTIVES LIDARMODUL FÜR EIN KRAFTFAHRZEUG**

(30) Priorität: 08.09.2020 DE 102020123431
(71) Anmelder: Marelli Automotive Lighting Reutlingen (Germany) GmbH, 72762 Reutlingen (DE)
(72) Erfinder: Brill, Johannes, 70567 Stuttgart (DE); Buchberger, Christian, 72770 Reutlingen (DE); Licht, Martin, 72762 Reutlingen (DE)
(74) Vertreter: DREISS Patentanwälte PartG mbB

(57) **Zusammenfassung**

Vorgestellt wird ein adaptives Lidarmodul (12) für ein Kraftfahrzeug (10). Das Lidarmodul (12) weist Lasermittel und eine optische Vorrichtung (32) auf, die dazu eingerichtet ist, Laserlicht (20) in einen Detektionsbereich (14, 16, 18) umzulenken. Die optische Vorrichtung (32) weist Strahlengänge (54, 56, 58) mit voneinander verschiedenen Brennweiten (f54, f56, f (58) auf, mit denen von dem Lasermittel ausgehendes Laserlicht (20) in einen Detektionsbereich (14, 16, 18) umlenkbar ist. Ein Ausmaß der Umlenkung ist durch einen Übergang von einem eine erste Brennweite aufweisenden Strahlengang zu einem eine zweite Brennweite aufweisenden Strahlengang steuerbar.

## Beschreibung

Die vorliegende Erfindung betrifft ein adaptives Lidarmodul nach dem Oberbegriff des Anspruchs 1.

Ein solches Lidarmodul ist aus der DE 10 2008 055 159 A1 bekannt. Das bekannte Lidarmodul weist Lasermittel und eine optische Vorrichtung auf, die dazu eingerichtet ist, von dem Lasermittel ausgehendes Laserlicht zu sammeln und in einen Detektionsbereich des Lidarmoduls umzulenken. Dabei ist ein Ausmaß der Umlenkung im Betrieb des Lidarmoduls steuerbar, so dass eine Form und/oder eine Lage des mit dem umgelenkten Laserlicht beleuchteten Detektionsbereichs im Betrieb des Lidarmoduls steuerbar variabel ist. Die Umlenkung erfolgt dadurch, dass das Laserlicht an einem resonant schwingenden Mikrospiegel reflektiert wird, dessen Schwingungsamplitude in gesteuerter Weise veränderbar ist.

Losgelöst von dem genannten Stand der Technik werden aktuell Lidarmodule realisiert, die jeweils die gesamte Szenerie gleichzeitig ausleuchten. Dazu können kontinuierlich scannende Lidarmodule oder auch gepulst betriebene Flash-Lidarmodule verwendet werden. Die Wellenlängen des verwendeten Laserlichtes liegen im Bereich von knapp unter 900 nm bis knapp über 1500 nm.

Um dabei eine möglichst große Reichweite zu erzielen, werden bevorzugt Wellenlängen von 1550 nm statt der sonst üblichen 905 nm verwendet. Die mit der größeren der beiden Wellenlängen arbeitenden Lidarmodule können augensicher (Laserklasse 1) mit dem 40-fachen der Leistung der mit der kürzeren Wellenlänge arbeitenden Lidarmodule betrieben werden. Mit diesen Lidarmodulen werden die Laserlichtquellen in der Regel jeweils mit voller Leistung betrieben. Dabei wird das gesamte Umfeld ausgeleuchtet, obwohl dies nicht in allen Fahrsituationen erforderlich ist.

Von diesem Stand der Technik unterscheidet sich die vorliegende Erfindung in ihren Vorrichtungsaspekten durch die kennzeichnenden Merkmale des Anspruchs 1 und in ihren Verfahrensaspekten durch die kennzeichnenden Merkmale des unabhängigen Verfahrensanspruchs. Bezüglich der Vorrichtungsmerkmale ist erfindungsgemäß vorgesehen, dass die optische Vorrichtung Strahlengänge mit voneinander verschiedenen Brennweiten aufweist, mit denen von dem Lasermittel ausgehendes Laserlicht zur Erzeugung eines mit Laserlicht beleuchteten Detektionsbereiches umlenkbar ist und dass ein Ausmaß der Umlenkung durch einen Übergang von einem eine erste Brennweite aufweisenden Strahlengang zu einem eine zweite Brennweite aufweisenden Strahlengang steuerbar ist.

Mit einer Veränderung der Brennweite lässt sich die Lage und/oder die Form des von dem Lidarmodul beleuchteten Detektionsbereiches verändern. Betrachtet man ein Lidarmodul, das mit jeweils einer von zwei voneinander verschiedenen Brennweiten arbeiten kann, dann wird mit der kürzeren der beiden Brennweiten ein erster Detektionsbereich beleuchtet, und mit der längeren der beiden Brennweiten wird ein zweiter Detektionsbereich beleuchtet. Der zweite Detektionsbereich ist dann in Abstrahlrichtung länger (größere Reichweite) und dafür schmaler als der erste Detektionsbereich.

Mit der Erfindung wird ein adaptives Lidarmodul und ein Verfahren zum Steuern eines adaptiven Lidarmoduls angegeben, das energieoptimiert betrieben werden kann. Der energieoptimierte Betrieb führt zu einer präventiven Reduzierung der beim Betrieb im Lidarmodul freigesetzten Wärme, was die Anforderungen an die Kühlung verringert und die Lebensdauer erhöht.

Da die Ausleuchtung der Szenerie adaptiv erfolgt, kann bei entsprechender Sensibilität eines Detektors des Lidarmoduls die Auflösung des Lidarmoduls an die aktuelle Fahrsituation angepasst werden. Somit ergeben sich zahlreiche Möglichkeiten, den Detektionsbereich (das Sichtfeld (den Detektionsbereich, field of view) und damit die Auflösung und die Reichweite zu erhöhen oder zu verringern.

Eine bevorzugte Ausgestaltung zeichnet sich dadurch aus, dass das Lasermittel n Laserlichtquellen aufweist, die optische Vorrichtung zu jeder i-ten Laserlichtquelle mit i = 1 bis n genau ein i-tes optisches Element aufweist, das dazu eingerichtet ist, von der i-ten Laserlichtquelle ausgehendes Laserlicht zu sammeln und in einem i-ten Strahlengang in einen i-ten Detektionsbereich des Lidarmoduls umzulenken, die optische Vorrichtung zu jeder j-ten Laserlichtquelle mit j = 1 bis n und j ungleich i genau ein j-tes optisches Element aufweist, das dazu eingerichtet ist, von der j-ten Laserlichtquelle ausgehendes Laserlicht zu sammeln und in einem j-ten Strahlengang in einen j-ten Detektionsbereich des Lidarmoduls umzulenken, und dass der Übergang von dem eine i-te Brennweite aufweisenden i-ten Strahlengang zu dem eine j-te Brennweite aufweisenden j-ten Strahlengang dadurch erfolgt, dass die i-te Laserlichtquelle ausgeschaltet wird und die j-te Laserlichtquelle eingeschaltet wird.

Bevorzugt ist auch, dass die Zahl n der Laserlichtquellen und optischen Elemente gleich 3 ist.

Weiter ist bevorzugt, dass jedes optische Element ein Hohlspiegelreflektor ist.

In einer alternativen Ausgestaltung ist jedes optische Element eine Linse. In einer weiteren alternativen Ausgestaltung ist jedes optische Element eine katadioptrische Optik.

Bevorzugt ist auch, dass die optische Vorrichtung eine Linse mit elektrisch steuerbarer Brennweite aufweist.

Weiter ist bevorzugt, dass die optische Vorrichtung ein Mehrlinsensystem mit elektromagnetisch verstellbarem Abstand der Linsen aufweist.

Weitere Vorteile ergeben sich aus der nachfolgenden Beschreibung, den Zeichnungen und den Unteransprüchen. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert.

Dabei zeigen, jeweils in schematischer Form:
- Figur 1: ein Kraftfahrzeug mit einem adaptiven Lidarmodul 12;
- Figur 2: Einzelheiten eines Lidarmoduls, das Lasermittel und eine optische Vorrichtung aufweist;
- Figur 3: eine Alternative zu der optischen Vorrichtung aus Figur 2;
- Figur 4: eine weitere Alternative zu der optischen Vorrichtung aus Figur 2;
- Figur 5: als eine weitere Alternative zu der optischen Vorrichtung aus Figur 2 eine optische Vorrichtung, die eine Linse mit elektrisch steuerbarer Brennweite aufweist;
- Figur 6: als eine weitere Alternative zu der optischen Vorrichtung nach Figur 2 eine optische Vorrichtung mit einem Mehrlinsensystem; und
- Figur 7: ein Flussdiagramm als Ausführungsbeispiel eines erfindungsgemäßen Verfahrens.

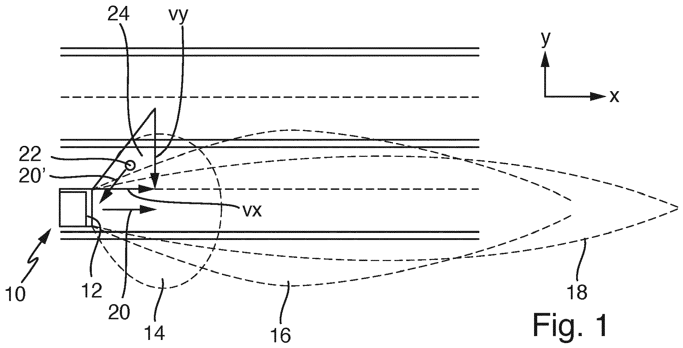

Im Einzelnen zeigt die Figur 1 ein Kraftfahrzeug 10 mit einem adaptiven Lidarmodul 12. Das Lidarmodul 12 ist dazu eingerichtet, voneinander verschiedene Detektionsbereiche 14, 16, 18 mit Laserlicht 20 zu beleuchten und Laserlicht 20', das von Objekten 22 reflektiert wird, die sich in einem Detektionsbereich befinden, aufzunehmen.

Das Fahrzeug 10 bewegt sich zum Beispiel mit einem Geschwindigkeitsvektor vx in x-Richtung. Quer dazu bewegt sich ein Objekt 22 mit einem Geschwindigkeitsvektor vy in minus-y-Richtung. Durch Multiplikation mit einer für beide Geschwindigkeitsvektoren gleichen Zeitspanne ergeben sich Wegstrecken, die als Katheten eines rechtwinkligen Interaktionsdreiecks 24 betrachtet werden können:
Wenn man die räumliche Ausdehnung des Fahrzeugs 10 und des Objekts 22 vernachlässigt, gilt Folgendes: Objekte 22, die zu einem Zeitpunkt t0 die Hypotenuse kreuzen, kollidieren mit dem Fahrzeug 10. Objekte 22, die sich zum Zeitpunkt t0 innerhalb des Interaktionsdreiecks 24 befinden, kreuzen die Bahn des Fahrzeugs 10 innerhalb der Zeitspanne vor dem Fahrzeug 10. Objekte 22, die sich zum Zeitpunkt t0 außerhalb des Interaktionsdreiecks 24 befinden kreuzen die künftige Bahn des Fahrzeugs 10 in der Zeitspanne nicht.

Eine Kollisionsgefahr geht daher im Wesentlichen von Objekten 22 aus, die sich zum Zeitpunkt t0 innerhalb des Interaktionsdreiecks 24 befinden. Die Breite und Länge des Interaktionsdreiecks 24 hängt im dargestellten Beispiel von den Geschwindigkeiten vx des Fahrzeugs 10 und vy des Objektes 22 ab. Damit wird eine Anpassung der Länge und Breite des Detektionsbereichs an diese Geschwindigkeiten sinnvoll.

Figur 1 zeigt ein Ausführungsbeispiel mit n = 3 Detektionsbereichen 14, 16, 18, die sich durch ihre Lage relativ zum Lidarmodul 12 und durch ihre Form voneinander unterscheiden. Die Unterschiede bestehen im Wesentlichen in der Länge der Detektionsbereiche 14, 16, 18 in einer zentralen Abstrahlrichtung (x-Richtung, Fahrtrichtung) und einer quer zu der zentralen Abstrahlrichtung liegenden Breite (y-Richtung).

Ein erster Detektionsbereich 14 liegt in der zentralen Abstrahlrichtung näher an dem Lidarmodul 12 als die übrigen Detektionsbereiche, die hier ein zweiter Detektionsbereich 16 und ein dritter Detektionsbereich 18 sind. Der erste Detektionsbereich 14 ist breiter als diese übrigen Detektionsbereiche 16, 18.

Ein dritter Detektionsbereich 18 erstreckt sich in der zentralen Abstrahlrichtung weiter von dem Lidarmodul 12 weg als die übrigen Detektionsbereiche, die hier ein erster Detektionsbereich 14 und ein zweiter Detektionsbereich 16 sind. Der dritte Detektionsbereich 18 ist schmaler als diese übrigen Detektionsbereiche 14 und 16.

Ein zweiter Detektionsbereich 16 erstreckt sich in der zentralen Abstrahlrichtung über den ersten Detektionsbereich 14 hinaus, ohne die Länge eines dritten Detektionsbereiches 18 zu erreichen. Der zweite Detektionsbereich 16 ist schmaler als der erste Detektionsbereich 14 und breiter als der dritte Detektionsbereich 18.

Es ist bevorzugt, dass sich je zwei einander benachbarte Detektionsbereiche in der zentralen Abstrahlrichtung überlappen oder dass sie zumindest ohne eine zwischen ihnen liegende Lücke aneinander anschließen.

An Stelle von n = 3 Detektionsbereichen können auch nur zwei oder auch mehr als drei Detektionsbereiche einstellbar sein.

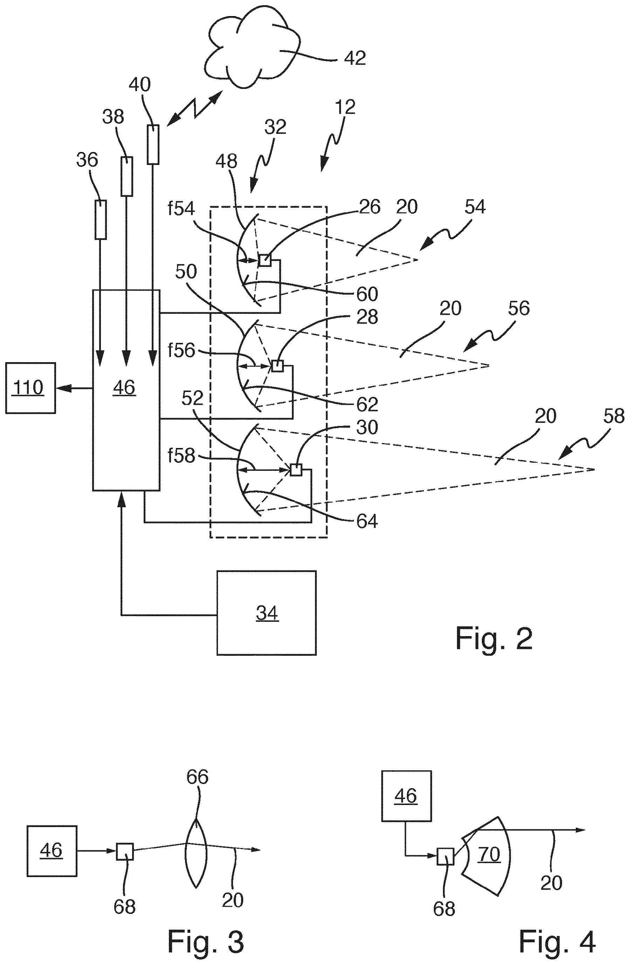

Figur 2 zeigt Einzelheiten eines Lidarmoduls 12, das Lasermittel, hier drei Laserlichtquellen 26, 28, 30, und eine optische Vorrichtung 32 aufweist. Darüber hinaus weist das Lidarmodul 12 eine Empfangskanalstruktur 34 und ein Steuergerät 46 auf. Das Steuergerät 46 steuert das Lasermittel und/oder die optische Vorrichtung 32 und verarbeitet dazu Betriebsparameter abbildende Signale fahrzeugeigener Sensoren 36 und/oder eines Navigationssystems 38 und/oder externe Parameter anderer Verkehrsteilnehmer.

Für einen Empfang von externen Parametern wie Informationen von anderen Verkehrsteilnehmern weist das Fahrzeug 10 bevorzugt Mobilfunkkommunikationsmittel 40 zur Kommunikation mit einer Cloud 42 auf. Zu den Betriebsparametern gehören zum Beispiel die Geschwindigkeit des Fahrzeugs 10, sein Lenkwinkel, seine Lenkrate, GPS-Daten, und Verkehrsinformationen, ohne dass diese Beispielcharakter aufweisende Aufzählung abschließend gemeint ist. Zur Bereitstellung der Betriebsparameter weist das Fahrzeug 10 entsprechende Sensoren 36 auf. Alternativ oder ergänzend werden Betriebsparameter, die nicht direkt von einem Sensor gemessen werden, von dem Steuergerät 46 aus Signalen anderer Sensoren berechnet.

Die optische Vorrichtung weist zu jeder Laserlichtquelle 26, 28, 30 ein optisches Element 48, 50, 52 auf, das dazu eingerichtet ist, das von der zugehörigen Laserlichtquelle ausgehende Laserlicht zu sammeln. Die Zahl n der Laserlichtquellen 26, 28, 30 und optischen Elemente 48, 50, 52 ist in dem in der Figur 2 dargestellten Beispiel gleich 3. Die Zahl n kann auch von n = 3 abweichen und zum Beispiel eine andere Zahl zwischen (einschließlich) zwei und Zehn sein. Die Zahl n = 3 hat sich aber als guter Kompromiss zwischen Forderungen nach einer möglichst hochaufgelösten Anpassung und Forderungen nach einem möglichst geringen baulichen Aufwand erwiesen.

Jede Laserlichtquelle 26, 28, 30 ist von einem Steuergerät 46 individuell steuerbar und dient dazu, jeweils einen der Detektionsbereiche 14, 16, 18 mit ihrem Laserlicht 20 zu beleuchten. Die Wellenlängen des Laserlichtes 20 beträgt bevorzugt 1550 nm.

Die optische Vorrichtung 32 ist dazu eingerichtet, von dem Lasermittel ausgehendes Laserlicht 20 zu sammeln und in einen Detektionsbereich 14, 16, 18 des Lidarmoduls 12 umzulenken. Dabei ist ein Ausmaß der Umlenkung im Betrieb des Lidarmoduls 12 steuerbar, so dass eine Form und/oder eine Lage des mit dem umgelenkten Laserlicht 20 beleuchteten Detektionsbereichs 14, 16, 18 im Betrieb des Lidarmoduls 12 steuerbar variabel ist.

Dazu weist die optische Vorrichtung 32 Strahlengänge 54, 56, 58 mit voneinander verschiedenen Brennweiten f54, f56, f58 auf, mit denen von dem Lasermittel ausgehendes Laserlicht 20 zur Erzeugung der mit dem Laserlicht 20 beleuchtbaren Detektionsbereiche 14, 16, 18 umlenkbar ist.

So wird der erste Detektionsbereich 14 von der ersten Laserlichtquelle 26 beleuchtet. Der zweite Detektionsbereich 16 wird von der zweiten Laserlichtquelle 28 beleuchtet, und der dritte Detektionsbereich 18 wird von der dritten Laserlichtquelle 30 beleuchtet. Dabei überlappen sich die Detektionsbereiche 14, 16, 18, so dass Laserlicht 20 der dritten Laserlichtquelle 30 auch zur Beleuchtung des ersten Detektionsbereichs 14 und des zweiten Detektionsbereichs 16 beiträgt und Licht der zweiten Laserlichtquelle 26 auch zur Beleuchtung des ersten Detektionsbereichs 14 beiträgt.

Allgemein gilt dabei, das Laserlicht 20 einer Laserlichtquelle, das primär zur Beleuchtung eines sich vergleichsweise weit vor dem Lidarmodul 12 erstreckenden Detektionsbereichs dient, auch zur Beleuchtung eines oder mehrerer Detektionsbereiche beiträgt, die sich weniger weit vor dem Lidarmodul 12 erstrecken.

Die Brennweite f54, f56, f58 eines Strahlengangs 54, 56, 58 ist jeweils eine Brennweite der optischen Vorrichtung 32, mit der ein Öffnungswinkel des in diesem Strahlengang propagierenden Laserlichtbündels 54, 56, 58 einer Laserlichtquelle 26, 28, 30 verringert wird.

Bei dem in der Figur 2 dargestellten Beispiel weist die optische Vorrichtung 32 für jeden Strahlengang 54, 56, 58 einen Hohlspiegelreflektor 60, 62, 64 als optisches Element 48, 50, 52 auf. Die erste Laserlichtquelle 26 ist in einem Brennpunkteines ersten Hohlspiegelreflektors 60 angeordnet. Die zweite Laserlichtquelle 28 ist in einem Brennpunkt eines zweiten Hohlspiegelreflektors 62 angeordnet. Die dritte Laserlichtquelle 30 ist in einem Brennpunkt eines dritten Hohlspiegelreflektors 64 angeordnet. Die Brennweite f58 des dritten Hohlspiegelreflektors 64 ist größer als die Brennweite f56 des zweiten Hohlspiegelreflektors 62, und diese ist größer als die Brennweite f54 des ersten Hohlspiegelreflektors 60.

Ein Ausmaß der Umlenkung ist durch einen Übergang von einem eine bestimmte (z.B. eine erste) Brennweite aufweisenden Strahlengang zu einem eine von der bestimmten Brennweite verschiedene (zum Beispiel eine zweite) Brennweite aufweisenden Strahlengang steuerbar.

Die Zahl n der Laserlichtquellen und optischen Elemente ist in dem in der Figur 2 dargestellten Beispiel = 3. Die Zahl n kann auch von n = 3 abweichen und zum Beispiel eine andere Zahl zwischen (einschließlich) zwei und Zehn sein. Die Zahl n = 3 hat sich aber als guter Kompromiss zwischen Forderungen nach einer möglichst hochaufgelösten Anpassung und Forderungen nach einem möglichst geringen baulichen Aufwand erwiesen.

Die im Folgenden Satz eingeführten Indices i und j sollen die Strahlengänge und die zugehörigen optischen Komponenten wie Laserlichtquellen und optische Elemente nummerieren.

Die optische Vorrichtung weist zu jeder i-ten Laserlichtquelle mit i = 1 bis n genau ein i-tes optisches Element auf, das dazu eingerichtet ist, von der i-ten Laserlichtquelle ausgehendes Laserlicht zu sammeln und in einem i-ten Strahlengang in einen i-ten Detektionsbereich des Lidarmoduls umzulenken.

Die optische Vorrichtung weist zu jeder j-ten Laserlichtquelle mit j = 1 bis n und j ungleich i genau ein j-tes optisches Element auf, das dazu eingerichtet ist, von der j-ten Laserlichtquelle ausgehendes Laserlicht zu sammeln und in einem j-ten Strahlengang in einen j-ten Detektionsbereich des Lidarmoduls umzulenken.

Der Übergang von dem eine i-te Brennweite aufweisenden i-ten Strahlengang zu dem eine j-te Brennweite aufweisenden j-ten Strahlengang erfolgt in diesem Ausführungsbeispiel dadurch, dass die i-te Laserlichtquelle ausgeschaltet wird und die j-te Laserlichtquelle eingeschaltet wird.

Das Einschalten und Ausschalten der Laserlichtquellen erfolgt durch ein Steuergerät des Lidarmoduls.

Bei dem unter Bezug auf die Figur 2 erläuterten Ausführungsbeispiel sind die optischen Elemente Hohlspiegelreflektoren.

Figur 3 zeigt eine Alternative zu den Hohlspiegelreflektoren. An Stelle der Hohlspiegelreflektoren kann die optische Vorrichtung Linsen aufweisen. Figur 3 zeigt eine solche Linse 66 zusammen mit einer zugehörigen Laserlichtquelle 68, deren Laserlicht 20 von der Linse gesammelt wird. Die Laserlichtquelle 68 ist im Brennpunkt der Linse angeordnet und wird von dem Steuergerät 46 gesteuert und dazu insbesondere eingeschaltet und ausgeschaltet.

Figur 4 zeigt eine weitere Alternative zu den Hohlspiegelreflektoren. An Stelle der Hohlspiegelreflektoren kann die optische Vorrichtung 32 katadioptrische Optiken 70 aufweisen. Figur 3 zeigt eine solche katadioptrische Optik 70 zusammen mit einer zugehörigen Laserlichtquelle 68, deren Laserlicht 20 von der katadioptrischen Optik 70 gesammelt wird. Die Laserlichtquelle 68 ist im Brennpunkt der katadioptrischen Optik 70 angeordnet und wird von dem Steuergerät 46 gesteuert und dazu insbesondere eingeschaltet und ausgeschaltet.

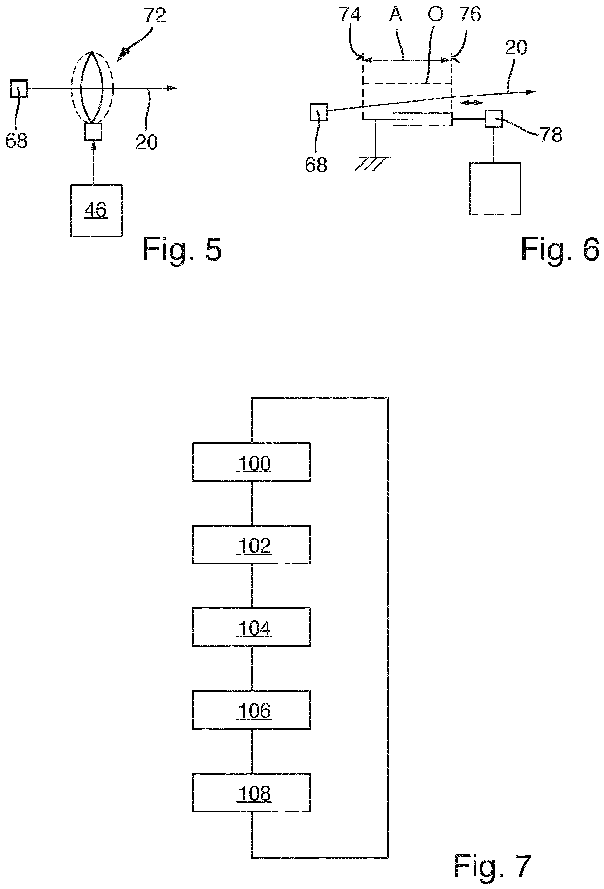

Figur 5 zeigt als eine weitere Alternative zu der optischen Vorrichtung 32 nach Figur 2 eine optische Vorrichtung, die eine Linse 72 mit elektrisch steuerbarer Brennweite f72 aufweist. Eine solche Linse wird zum Beispiel von der Firma Optotune unter der Bezeichnung electrically tunable lens EL-16-40-TC auf dem Markt angeboten. Bei Verwendung einer solchen Linse 72 als optische Vorrichtung 32 können die Lasermittel auf eine einzelne Laserlichtquelle beschränkt sein, weil die voneinander verschiedenen Strahlengänge durch gesteuerte Veränderung der Brennweite f72 der Linse 72 mit elektrisch steuerbarer Brennweite f72 realisiert werden.

Figur 6 zeigt als eine weitere Alternative zu der optischen Vorrichtung 32 nach Figur 2 eine optische Vorrichtung, die ein Mehrlinsensystem mit elektromagnetisch verstellbarem Abstand A der Linsen 74, 76 aufweist. Die Linsen 74, 76 sind längs einer optischen Achse O der Linsen in Reihe in dem Strahlengang des Laserlichts 20 einer einzelnen Laserlichtquelle 68 angeordnet. Die Verstellung des Abstands A kann zum Beispiel durch ein Stellglied 78 erfolgen, das von dem Steuergerät 46 gesteuert wird. Die Verstellung selbst kann zum Beispiel mittels eines elektromotorisch angetriebenen Stellgewindes oder eine elektromotorisch angetriebene Zahnstangen-Ritzel-Kombination erfolgen.

Bei Verwendung eines solchen Mehrlinsensystems als optische Vorrichtung 32 können die Lasermittel ebenfalls auf eine einzelne Laserlichtquelle beschränkt sein, weil die voneinander verschiedenen Strahlengänge durch gesteuerte Veränderung des Abstandes A der Linsen 74, 76 voneinander realisiert werden.

Figur 7 zeigt ein Flussdiagramm als Ausführungsbeispiel eines erfindungsgemäßen Verfahrens.

In einem ersten Schritt 100 liest das Steuergerät 46 Betriebsparameter abbildende Signale fahrzeugeigener Sensoren und/oder eines Navigationssystems und/oder externe Parameter anderer Verkehrsteilnehmer ein. Zu solchen Betriebsparametern gehören zum Beispiel die eigene Fahrgeschwindigkeit, der eigene Lenkwinkel, die eigene Lenkrate, GPS-Informationen, Verkehrsinformationen, und externe Parameter wie cloud-basierte Informationen anderer Verkehrsteilnehmer.

In einem zweiten Schritt 102 bestimmt das Steuergerät 46 in Abhängigkeit von diesen Signalen, welcher Detektionsbereich beleuchtet werden soll.

In einem dritten Schritt 104 steuert das Steuergerät 46 wenigstens eine der Laserlichtquellen 26, 28, 30, 68 und/oder die optische Vorrichtung 32 so an, dass von der betreffenden Laserlichtquelle 26, 28, 30, 68 ausgehendes Licht in den im zweiten Schritt 102 bestimmten Detektionsbereich umgelenkt wird, wodurch dieser beleuchtet wird. Das dafür erforderliche Ausmaß der Umlenkung wird dabei durch einen Übergang von einem eine erste Brennweite aufweisenden Strahlengang zu einem eine zweite Brennweite aufweisenden Strahlengang gesteuert.

Der Übergang von dem eine erste Brennweite aufweisenden Strahlengang zu dem eine zweite Brennweite aufweisenden Strahlengang wird in Abhängigkeit von wenigstens einem der folgenden Betriebsparameter des Kraftfahrzeugs 10 gesteuert: Fahrgeschwindigkeit, Lenkwinkel, Lenkrate, GPS-Informationen, Verkehrsinformationen, externe Parameter wie cloudbasierte Informationen anderer Verkehrsteilnehmer.

In einem vierten Schritt 106 wertet das Steuergerät 46 ggf. von im beleuchteten Detektionsbereich lokalisierten Objekten 22 reflektiertes Laserlicht 20' aus.

In einem fünften Schritt 108 wird dem Fahrer des Fahrzeugs 10 die ausgewertete Information präsentiert. Zum Beispiel werden dem Fahrer Informationen bezüglich Objekten präsentiert, die seinen Fahrweg kreuzen könnten. Dazu weist das Fahrzeug akustische, haptische oder visuelle Anzeigemittel 110 auf, die vom Steuergerät 46 angesteuert werden (vergleiche Figur 2).

## Patentansprüche

1. Adaptives Lidarmodul (12) für ein Kraftfahrzeug (10), welches Lidarmodul (12) Lasermittel () und eine optische Vorrichtung (32) aufweist, die dazu eingerichtet ist, von dem Lasermittel ausgehendes Laserlicht (20) zu sammeln und in einen Detektionsbereich (14, 16, 18) des Lidarmoduls (12) umzulenken, wobei ein Ausmaß der Umlenkung im Betrieb des Lidarmoduls (12) steuerbar ist, so dass eine Form und/oder eine Lage des mit dem umgelenkten Laserlicht (20) beleuchteten Detektionsbereichs (14, 16, 18) im Betrieb des Lidarmoduls (12) steuerbar variabel ist, **dadurch gekennzeichnet, dass** die optische Vorrichtung (32) Strahlengänge (54, 56, 58) mit voneinander verschiedenen Brennweiten (f54, f56, f58)aufweist, mit denen von dem Lasermittel ausgehendes Laserlicht (20) zur Erzeugung eines mit Laserlicht (20) beleuchteten Detektionsbereiches (14, 16, 18) umlenkbar ist und dass ein Ausmaß der Umlenkung durch einen Übergang von einem eine erste Brennweite aufweisenden Strahlengang zu einem eine zweite Brennweite aufweisenden Strahlengang steuerbar ist.

2. Adaptives Lidarmodul (12) nach Anspruch 1, **dadurch gekennzeichnet, dass** das Lasermittel n Laserlichtquellen aufweist, die optische Vorrichtung zu jeder i-ten Laserlichtquelle mit i = 1 bis n genau ein i-tes optisches Element aufweist, das dazu eingerichtet ist, von der i-ten Laserlichtquelle ausgehendes Laserlicht zu sammeln und in einem i-ten Strahlengang in einen i-ten Detektionsbereich des Lidarmoduls umzulenken, die optische Vorrichtung zu jeder j-ten Laserlichtquelle mit j = 1 bis n und j ungleich i genau ein j-tes optisches Element aufweist, das dazu eingerichtet ist, von der j-ten Laserlichtquelle ausgehendes Laserlicht zu sammeln und in einem j-ten Strahlengang in einen j-ten Detektionsbereich des Lidarmoduls umzulenken, und dass der Übergang von dem eine i-te Brennweite aufweisenden i-ten Strahlengang zu dem eine j-te Brennweite aufweisenden j-ten Strahlengang dadurch erfolgt, dass die i-te Laserlichtquelle ausgeschaltet wird und die j-te Laserlichtquelle eingeschaltet wird.

3. Adaptives Lidarmodul (12) nach Anspruch 1 oder 2, **dadurch gekennzeichnet, dass** die Zahl n der Laserlichtquellen und optischen Elemente = 3 ist.

4. Lidarmodul (12) nach einem der Ansprüche 1 bis 3, **dadurch gekennzeichnet, dass** jedes optische Element ein Hohlspiegelreflektor ist.

5. Lidarmodul (12) nach einem der Ansprüche 1 bis 3, **dadurch gekennzeichnet, dass** jedes optische Element eine Linse ist.

6. Lidarmodul (12) nach einem der Ansprüche 1 bis 3, **dadurch gekennzeichnet, dass** jedes optische Element eine katadioptrische Optik ist.

7. Lidarmodul (12) nach Anspruch 1, **dadurch gekennzeichnet, dass** die optische Vorrichtung eine Linse mit elektrisch steuerbarer Brennweite aufweist.

8. Lidarmodul (12) nach Anspruch 1, **dadurch gekennzeichnet, dass** die optische Vorrichtung ein Mehrlinsensystem mit elektromagnetisch verstellbarem Abstand der Linsen aufweist.

9. Verfahren zum Steuern eines adaptiven Lidarmoduls (12) für ein Kraftfahrzeug (10), welches Lidarmodul (12) Lasermittel und eine optische Vorrichtung (32) aufweist, die dazu eingerichtet ist, von dem Lasermittel ausgehendes Laserlicht (20) zu sammeln und in einen Detektionsbereich (14, 16, 18) des Lidarmoduls (12) umzulenken, wobei ein Ausmaß der Umlenkung im Betrieb des Lidarmoduls (12) steuerbar ist, so dass eine Form und/oder eine Lage des mit dem umgelenkten Laserlicht (20) beleuchteten Detektionsbereichs (14, 16, 18) im Betrieb des Lidarmoduls (12) steuerbar variabel ist, **dadurch gekennzeichnet, dass** die optische Vorrichtung (32) Strahlengänge (54, 56, 58) mit voneinander verschiedenen Brennweiten (f54, f56, f58) aufweist, mit denen von dem Lasermittel ausgehendes Laserlicht (20) zur Erzeugung eines mit Laserlicht (20) beleuchteten Detektionsbereiches (14, 16, 18) umlenkbar ist und dass ein Ausmaß der Umlenkung durch einen Übergang von einem eine erste Brennweite aufweisenden Strahlengang zu einem eine zweite Brennweite aufweisenden Strahlengang gesteuert wird.

10. Verfahren nach Anspruch 9, **dadurch gekennzeichnet, dass** der Übergang von einem eine erste Brennweite aufweisenden Strahlengang zu einem eine zweite Brennweite aufweisenden Strahlengang in Abhängigkeit von wenigstens einem der folgenden Betriebsparameter des Kraftfahrzeugs erfolgt: Fahrgeschwindigkeit, Lenkwinkel, Lenkrate, GPS-Informationen, Verkehrsinformationen, externe Parameter wie cloud-basierte Informationen anderer Verkehrsteilnehmer.
